# EUROPÄISCHE PATENTSCHRIFT

(11) **EP 4 048 907 B1**
(45) Veröffentlichungstag und Bekanntmachung des Hinweises auf die Patenterteilung: **03.07.2024**
(21) Anmeldenummer: 20799965.7
(22) Anmeldetag: 22.10.2020
(51) Int. Cl.: F16B 12/12, F16B 12/46, F16B 12/24, A63H 33/00, A47B 47/04, A47B 95/00

(54) **MOEBEL AUS MEHREREN MITEINANDER VERBINDBAREN PLATTENFOERMIGEN ELEMENTEN**
FURNITURE MADE FROM A PLURALITY OF INTERCONNECTABLE PLANAR ELEMENTS
MEUBLE CONSTITUÉ D'UNE PLURALITÉ D'ÉLÉMENTS PLANS POUVANT ÊTRE RACCORDÉS ENTRE EUX

(30) Priorität: 22.10.2019 AT 509092019
(43) Veröffentlichungstag der Anmeldung: 31.08.2022
(73) Patentinhaber: Regner, Sam John, 2241 Schönkirchen Reyersdorf (AT)
(72) Erfinder: Regner, Sam John, 2241 Schönkirchen Reyersdorf (AT)
(74) Vertreter: Speringer, Markus
(86) Internationale Anmeldenummer: PCT/AT2020/060376
(87) Internationale Veröffentlichungsnummer: WO 2021/077146

(56) Entgegenhaltungen:
- EP-A1- 0 078 746
- WO-A1-2005/117796
- CN-A- 104 819 192
- FR-A5- 2 176 194
- GB-A- 660 567
- US-A- 3 313 575
- US-A- 6 045 290
- US-A1- 2013 048 632

## Beschreibung

### Technisches Gebiet

Die Erfindung betrifft Möbel aus mehreren miteinander verbindbaren plattenförmigen Elementen, insbesondere ausgestaltet als Kindermöbel, wie beispielsweise ein Spielhaus, wobei zumindest zwei der benachbarten plattenförmigen Elemente durch zumindest eine Steckverbindung verbindbar sind, und wobei diese Steckverbindung durch einen an der Stirnseite eines ersten plattenförmigen Elements ausgebildeten Vorsprung mit einem quer zur Flachseite des plattenförmigen Elements verlaufenden Durchbruch, eine Ausnehmung in einem zweiten plattenförmigen Element, in welche der Vorsprung des ersten plattenförmigen Elements einführbar ist, und ein formschlüssig in den Durchbruch am Vorsprung einsetzbares Sicherungselement ausgebildet ist, wobei das zweite plattenförmige Element im Bereich der Ausnehmung eine von der nächstgelegenen Stirnseite des plattenförmigen Elements her die Ausnehmung durchragende sacklochförmige Aufnahme aufweist, welche im zusammengesetzten Zustand mit dem Durchbruch im Vorsprung des ersten plattenförmigen Elements fluchtet, und wobei das Sicherungselement im zusammengesetzten Zustand vollständig innerhalb der sacklochförmigen Aufnahme und im Durchbruch des Vorsprungs liegt.

### Stand der Technik

Möbel mit verschiedenen Steckverbindungen, welche schnell und werkzeuglos zusammengebaut und gegebenenfalls wieder zerlegt werden können, sind seit langem bekannt. Die US 2366676 oder die US 4153311 beschreiben beispielsweise Regalsysteme aus zusammensteckbaren Brettern, welche an kritischen Stellen durch ein in eine Lasche einsteckbares Sicherungselement fixiert werden. In der US 2016136535 ist insbesondere ein Spielhaus für Kinder offenbart, welches ebenfalls allein durch Zusammenstecken rasch aufgebaut werden kann und am Ende durch einen Bolzen als Sicherungselement, welcher in entsprechende Durchbrüche eingesetzt wird, im zusammengebauten Zustand fixiert wird.

Die bekannten Verbindungen haben den Nachteil, dass insbesondere bei Möbeln für Kinder, wie beispielsweise auch bei Spielhäusern, diese Art des Aufbaus zwar rasch und problemlos durchführbar ist, aber entsprechend auch von den Kindern die Sicherungen leicht zu entfernen sind. Dadurch entsteht eine erhebliche Verletzungsgefahr für das Kind, da es möglich ist, dass es sich zwischen ungesicherten Bauelementen einklemmt oder gar, dass die gesamte Konstruktion zusammenbricht und Bauteile auf das Kind stürzen. Da eine Konstruktion mittels Steckverbindungen mit wertigeren Holzbauelementen aufgrund der oben genannten Sicherheitsbedenken bisher nicht praktikabel ist, werden entweder leichtere Elemente, wie beispielsweise Karton oder Schaumstoffmaterialien, eingesetzt oder aber es werden teure fest verschraubte Möbel verwendet.

Die GB 660567 A, die CN 104819192 A und die US 2013/048632 A1 zeigen jeweils bei Möbeln einsetzbare Steckverbindungen, bei welchen die Sicherungselemente zum Zusammenhalten der Verbindung versteckt anordenbar sind. Die Sicherungselemente sind dabei jedoch durchwegs schmale Stifte, welche auch nur auf einen einmaligen Aufbau des Möbels ausgelegt sind. Eine Demontage ist gar nicht oder nur sehr schwierig und unter eventueller Beschädigung der Steckverbindung möglich. Diese Art von Verbindungen ist daher für die gestellte Aufgabe, eine sichere aber auch von authorisierten Personen rasch lösbare Verbindung herzustellen, ungeeignet.

### Darstellung der Erfindung

Ziel der vorliegenden Erfindung ist es, ein modulares Möbel, insbesondere ausgeprägt als Kindermöbel, wie beispielsweise ein Spielhaus, zu schaffen, welches besonders rasch in wenigen Minuten und ohne den Einsatz von Werkzeug aufbaubar ist. Gleichzeitig soll es rasch zerlegbar und platzsparend verstaubar sein. Das Spielhaus soll dabei aus wertigen Holzbauelementen gebaut werden und dennoch kostengünstiger und komfortabler in der Handhabung sein, als fest zusammengeschraubte Spielhäuser. Der Austausch einzelner Bauelemente durch unterschiedlich ausgestaltete Module mit unterschiedlichen Spielmöglichkeiten soll ebenso rasch möglich sein, damit das Möbel an Kinder unterschiedlichen Alters und unterschiedlicher Interessen angepasst werden kann. Zusätzliche Funktionselemente, wie beispielsweise ein beleuchteter Sternenhimmel, sollen ebenso rasch installierbar sein. Die Sicherung der Konstruktion nach dem Zusammenbau soll vor Manipulationen durch Kinder geschützt sein, damit jegliche Verletzungsgefahr vermieden wird.

Diese Aufgabe wird durch die vorliegende Erfindung dadurch gelöst, dass im Bereich der sacklochförmigen Aufnahme im zweiten plattenförmigen Element an der Flachseite des Elements eine Öffnung vorgesehen ist, welche bis in die sacklochförmige Aufnahme reicht und im zusammengesetzten Zustand mit einer Öffnung im Sicherungselement annähernd fluchtet, wodurch das Sicherungselement durch Einführen eines Werkzeugs, wie beispielsweise eines Stiftes, in die Öffnungen und durch das anschließende Durchführen einer Schubbewegung aus der fixierten Lage lösbar ist. Dadurch, dass sich das Sicherungselement im zusammengesetzten Zustand vollständig innerhalb des zweiten plattenförmigen Elements befindet, kann es von außen nicht mehr einfach entfernt werden, weshalb eine ungewollte Demontage, beispielsweise durch ein Kind, verhindert wird. Das Sicherungselement kann beispielsweise ein Holzplättchen sein und die sacklochförmige Aufnahme ein Schlitz, in welchen dieses eingeschoben wird. Das Holzplättchen kann künstlerisch ausgestaltet sein, beispielsweise als ein Wichtel, welcher damit auch für das Kind verdeutlicht, dass dieser Wichtel als wichtigstes schützendes Element das ganze Spielhaus bzw. Möbel zusammenhält. Durch die Öffnung an der Flachseite des Elements kann zum gewollten Zerlegen ein Werkzeug, wie beispielsweise ein Stift, eingeführt werden, mittels welchem das Sicherungselement herausgeschoben werden kann. Damit dies möglich ist, muss die in Einschubrichtung außenliegende Kante der Öffnung im Sicherungselement weiter in Einschubrichtung nach innen ragen als die außenliegende Kante der Öffnung im zweiten plattenförmigen Element. Dies kann entweder dadurch bewerkstelligt werden, dass die Öffnung im Sicherungselement insgesamt kleiner ausgeführt ist, als jene im zweiten plattenförmigen Element, oder dass sie in Einschubrichtung weiter innen liegt, sodass die beiden Öffnungen nur annähernd fluchten und die entsprechende Kante in der Öffnung im Sicherungselement eine Angriffsfläche für das einzuführende Werkzeug bietet. Durch die kurze Bewegung mit dem Werkzeug gegen die Einschubrichtung ragt dann ein Abschnitt des Sicherungselements im Anschluss aus der Stirnseite des zweiten plattenförmigen Elements heraus und kann von außen gegriffen und wieder entfernt werden.

Dabei ist es ein weiteres vorteilhaftes Merkmal, dass das Sicherungselement im zusammengesetzten Zustand in der sacklochförmigen Aufnahme im zweiten plattenförmigen Element kraftschlüssig eingeklemmt ist. Eine formschlüssige Verbindung ist für die Sicherung zwar bereits ausreichend, aber eine zusätzliche kraftschlüssige Verbindung durch Einklemmen des Sicherungselements verhindert zusätzlich ein unwillkürliches Herausfallen, sollte das Möbel beispielsweise vollständig gekippt oder heftig angestoßen werden.

Es ist ferner ein weiteres vorteilhaftes Merkmal, dass die sacklochförmige Aufnahme im zweiten plattenförmigen Element und das Sicherungselement eine aufeinander abgestimmte Schlüssel-Schloss-Geometrie aufweisen, wodurch das Sicherungselement nur in einer Einsetzrichtung vollständig einsetzbar ist. Abgesehen von der künstlerischen Ausgestaltung des Sicherungselements, kann dieses auch eine spezielle Geometrie, wie beispielsweise eine im Wesentlichen dreieckige oder keilförmige Form aufweisen, oder auch seitliche Nuten oder Einkerbungen aufweisen. Wenn die sacklochförmige Ausnehmung gegengleich ausgebildet ist, kann auf diese Art sichergestellt werden, dass das Sicherungselement nur in eine bestimmte Richtung korrekt eingesetzt werden kann. Dies schließt jegliche Fehlbenutzung beim Zusammenbau aus.

In einer möglichen Ausführungsform der Erfindung ist es vorgesehen, dass das Möbel ein Spielhaus ist, welches vier plattenförmige Elemente als Wandteile und ein plattenförmiges Element als Dachteil umfasst, wobei die Wandteile miteinander über Haken und Aufnahmen ineinander steckbar sind und das Dachteil mit zumindest zwei gegenüberliegenden Wandteilen über jeweils zumindest eine Steckverbindung mit einem verdeckt einsetzbaren Sicherungselement verbindbar ist. Die Wandteile des Spielhauses können sehr rasch einfach durch Einsetzen der jeweiligen Haken in die Aufnahmen des benachbarten Wandteils zusammengefügt werden. Bei verschiedenen Wandteilen mit den gleichen Anordnungen an Haken und Aufnahmen können auch unterschiedlichste Module mit unterschiedlichen Öffnungen und Spielelementen beliebig kombiniert werden. Zum Abschluss wird von oben ein Dachteil aufgesetzt, welches dann durch das Einsetzen der Sicherungselemente die gesamte Konstruktion sichert. Im minimalsten Fall benötigt man nur an zwei gegenüberliegenden Wandteilen entsprechende Sicherungselemente zur Verbindung mit dem Dachteil. Zur vollständigen Sicherung ist es aber bevorzugt, zumindest ein Sicherungselement zwischen jedem Wandteil und dem Dachteil vorzusehen.

Dabei ist es ein weiteres vorteilhaftes Merkmal, dass im zusammengebauten Zustand an den Wandteilen im oberen Abschnitt nach innen ragende Vorsprünge zur Auflage eines Zwischendeckenteils vorgesehen sind, und dass am Dachteil nach unten ragende Vorsprünge vorgesehen sind, wodurch ein eingesetzter Zwischendeckenteil zwischen den Vorsprüngen der Wandteile und den Vorsprüngen des Dachteils eingeklemmt ist. Dadurch ist es besonders einfach möglich, auch den Innenraum des Spielhauses mit unterschiedlichen Modulen und Funktionen auszustatten. Beispielsweise kann ein Zwischendeckenteil eingesetzt werden, welcher Lichtelemente in Form eines Sternenhimmels aufweist. Die gesamte Elektronik sowie beispielsweise eine Batteriebox und/oder ein Empfänger für die Fernbedienung zum Ein- und Ausschalten der Lichtelemente befinden sich an der Oberseite des Zwischendeckenteils und damit gesichert zwischen dem Dachteil und dem Zwischendeckenteil. Wenn ein direkter Lichtschalter vorgesehen ist, so ragt dieser durch eine entsprechende Öffnung im Zwischendeckenteil nach unten und ist daher vom im Spielhaus befindlichen Kind bedienbar. Dadurch sind die empfindlichen Teile für die Kinder unzugänglich, wobei in der Gesamtkonstruktion weiterhin nur die Steckverbindung mit dem Sicherungselement benötigt wird, um alle Teile kindersicher zu verbinden. Je nach Anwendungsfall können auch andere Zwischendeckenelemente modular eingesetzt werden, beispielsweise mit Befestigungen für eine Schaukel, einen Hängesessel oder dergleichen. Es können auch weitere elektronische Einrichtungen, wie beispielsweise ein Mikrofon, ein Lautsprecher oder eine Kamera in das Zwischendeckenelement eingebaut sein. Dies ermöglicht es, die spielenden Kinder, ähnlich wie bei einem Babyfon zu beaufsichtigen oder über den Lautsprecher Musik in das Spielhaus zu übertragen.

Schließlich ist es gemäß einer weiteren vorteilhaften Ausführungsform vorgesehen, dass das Möbel eine Wandhalterung mit modular daran befestigbaren als Wandteil ausgeformten ersten plattenförmigen Elementen ist, wobei die Wandhalterung zumindest zwei normal zur Wand und senkrecht parallel zueinander ausgerichtete Halterungselemente umfasst, an deren Oberseite über ein Gelenk ein als Dachteil ausgeformtes schwenkbar verbundenes zweites plattenförmiges Element vorgesehen ist, und wobei ein modular daran befestigbares Wandteil über Haken und Aufnahmen an den Halterungselementen der Wandhalterung befestigbar ist, wonach der Dachteil nach dem Verschwenken in eine Sicherungsposition über zumindest eine Steckverbindung mit einem im zusammengesetzten Zustand vollständig innerhalb der sacklochförmigen Aufnahme und im Durchbruch des Vorsprungs liegenden Sicherungselement mit dem Wandteil verbindbar ist. Eine derartige Wandhalterung erlaubt es, verschiedene Wandelemente, die beispielsweise verschiedene Aktivitäten und Spiele aufweisen können, mit der Wandhalterung rasch und kindersicher zu befestigen und auszutauschen. Dabei können die Wandelemente beispielsweise gleich aufgebaut sein, wie die Wandelemente eines weiter oben beschriebenen Spielhauses, wodurch die einzelnen Elemente auf unterschiedliche Weise eingesetzt werden können. Es besteht auch die Möglichkeit, mehrere Wandelemente zur Lagerung auf einer Wandhalterung einzuhängen, wobei dann das zuletzt aufgehängte Wandelement mittels des Dachteils sowie der Steckverbindung gesichert wird. Dadurch kann ein Spielhaus auf platzsparende Weise verstaut werden, ohne dass die Gefahr besteht, dass die einzelnen Plattenelemente umfallen können. Die gelenkige Verbindung des Dachteils stellt eine bevorzugte Variante dar. Es versteht sich, dass der Dachteil auch als separates Element zur Sicherung aufgesetzt und mittels Steckverbindungen gesichert werden kann.

### Kurze Beschreibung der Zeichnungen

Die Erfindung wird nun in größerem Detail anhand von Ausführungsbeispielen sowie mit Hilfe der beiliegenden Figuren beschrieben. Dabei zeigen
Fig. 1 eine schematische perspektivische Explosionsansicht einer Steckverbindung eines erfindungsgemäßen Möbels,
Fig. 2 die Steckverbindung aus Fig. 1 in einer zusammengesetzten perspektivischen Ansicht,
Fig. 3 eine schematische Schnittdarstellung der Steckverbindung aus Fig. 1 im zusammengesetzten Zustand;
Fig. 4 eine schematische perspektivische Ansicht eines Spielhauses gemäß der Erfindung,
Fig. 5 eine weitere schematische perspektivische Ansicht eines Spielhauses gemäß der Erfindung mit einem eingesetzten Zwischendeckenteil,
Fig. 6 schematisch eine Wandhalterung und
Fig. 7 die wesentlichen Elemente der Wandhalterung aus Fig. 6 jeweils einzeln in einer Seitenansicht sowie schematisch ein daran zu befestigendes Wandteil.

### Weg(e) zur Ausführung der Erfindung

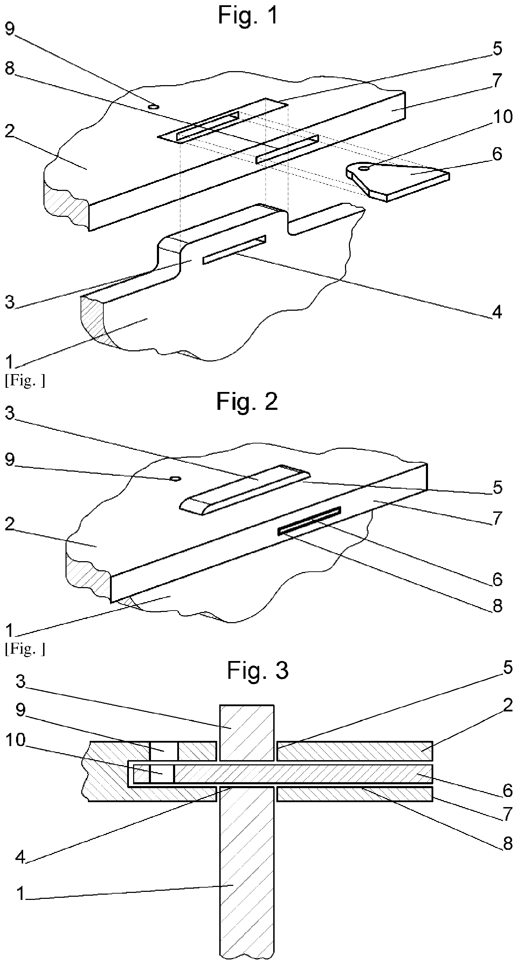

Bei der in der Fig. 1 dargestellten schematischen Explosionsansicht ist nur der Ausschnitt einer Steckverbindung zwischen einem ersten 1 und zweiten 2 plattenförmigen Element gezeigt. Die Dimensionierungen entsprechen nicht den tatsächlichen Abmessungen sondern veranschaulichen lediglich die prinzipielle Funktion der Steckverbindung. Das erste plattenförmige Element 1, welches hier beispielsweise einen Wandteil ausbildet, hat an seiner oberen Stirnseite einen Vorsprung 3 mit einem quer zur Flachseite des ersten plattenförmigen Elements 1 verlaufenden Durchbruch 4. Das zweite plattenförmige Element 2 ist hier als Dachteil ausgeführt und weist eine Ausnehmung 5 auf, in welche der Vorsprung 4 des ersten plattenförmigen Elements 1 einführbar ist. Die Ausnehmung 5 ist im Ausführungsbeispiel als vollständiger Durchbruch dargestellt, es ist jedoch auch möglich, diese Ausnehmung als Sackloch auszubilden, beispielsweise wenn das Dachteil dicker ausgeführt ist.

Das zweite plattenförmige Element 2 weist ferner an der zur Ausnehmung 5 nächstgelegenen Stirnseite 7 eine sacklochförmige Aufnahme 8 auf, welche die Ausnehmung 5 quer durchragt. Diese Aufnahme 8 fluchtet nach dem Einführen des Vorsprungs 3 des ersten plattenförmigen Elements 1 mit dem Durchbruch 4 am Vorsprung 3. Zur Sicherung der Verbindung der beiden plattenförmigen Elemente 1,2 wird ein Sicherungselement 6 eingesetzt, welches vollständig im Inneren der Aufnahme 8 aufgenommen ist und dabei auch den Durchbruch 4 durchragt, wodurch die beiden plattenförmigen Elemente 1,2 formschlüssig verbunden sind.

Das Sicherungselement 6 ist im Ausführungsbeispiel als Plättchen ausgebildet und kann künstlerisch ausgestaltet sein. Idealerweise ist das Sicherungselement 6 und die Aufnahme 8 so ausgestaltet, dass es beim Einsetzen des Sicherungselements 6 zu einer Klemmwirkung innerhalb der Aufnahme 8 kommt. In der Fig. 2 ist die Verbindung im zusammengebauten Zustand dargestellt. Das Sicherungselement, kann auf diese Art ohne Werkzeug nicht mehr entfernt werden, wodurch die Verbindung gegen ungewollte Manipulation, beispielsweise durch Kinder, gesichert ist.

In Fig. 3 ist die Steckverbindung im zusammengesetzten Zustand in einer Schnittansicht dargestellt. Damit das Sicherungselement 6 aus dieser Lage wieder entfernt werden kann, sind sowohl im Sicherungselement 6 als auch im zweiten plattenförmigen Element Öffnungen 9,10 vorgesehen, welche im zusammengesetzten Zustand beinahe fluchten. Es kann so zum Zerlegen des Möbelstücks ein Werkzeug, beispielsweise in Form eines Stiftes, in die Öffnung 9 im zweiten plattenförmigen Element 2 eingeführt werden, welches dann auch in die Öffnung 10 im Sicherungselement 6 eintaucht. Durch das Ausführen einer seitlichen Schubbewegung kann das Sicherungselement 6 aus der Aufnahme 8 ein Stück weit herausgedrückt werden. Anschließend kann das Sicherungselement 6 wieder von der Stirnseite 7 des zweiten plattenförmigen Elements 2 aus gegriffen und entfernt werden. Damit ist auch ein rasches Zerlegen zum Ab- und Umbau des Möbelstücks gewährleistet.

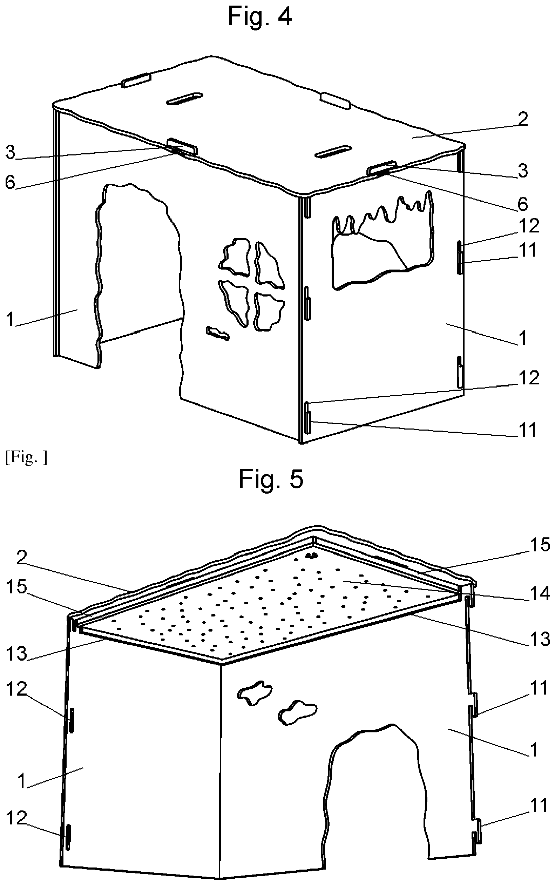

In der Fig. 4 ist ein erfindungsgemäßes Möbel als Spielhaus für Kinder dargestellt. Das Spielhaus besitzt vier erste plattenförmige Elemente 1, welche die Wandteile ausbilden. An den seitlichen Kanten besitzen die Wandteile jeweils drei ausgebildete Haken 11, welche in entsprechende Aufnahmen 12 an den Seitenkanten der angrenzenden Wandteile einsetzbar sind. Durch einfaches Zusammenstecken sind somit die Wände des Spielhauses schnell errichtet. Zur Fertigstellung wird ein zweites plattenförmiges Element 2 als Dachteil aufgesetzt. Zwischen jedem Wandteil und dem Dachteil ist eine oben beschriebene Steckverbindung angeordnet und das Dachteil wird durch Einführen von vier Sicherungselementen 6 gesichert. Dadurch können auch die Wandteile untereinander nicht mehr auseinandergezogen werden und das gesamte Spielhaus ist kindersicher verbunden.

Das Spielhaus soll die Kreativität der Kinder anregen und gleichzeitig verschiedene Lernreize anbieten, was durch den Einsatz verschiedener modularer Wandteile erreicht wird, welche wahlweise sehr einfach austauschbar sind. So können beispielsweise die einzelnen Wandteile mit Türen, Fenstern, Haltegriffen, Motorik- oder Spielelementen ausgestattet sein. Es können Zubehörteile an den einzelnen Modulen angebracht werden oder mit diesen gemeinsam verwendet werden. So kann beispielsweise ein Kasperltheater, ein Fühlsack, eine Lernuhr, ein Basketballkorb, ein Lenkrad, ein Spiegel, verschiedene Wurfspiele, verschiedene Schlösser und vieles mehr in den Wandteilen integriert sein bzw. mit diesen verbindbar sein. Durch unterschiedliche Öffnungen in verschiedenen Wandteilen, wie Türen, Fenster, dekorativ gestaltete Grifflöcher und dergleichen, ist es auch möglich, das im Haus spielende Kind zu beaufsichtigen. Durch den raschen Umbau ist es so möglich, gezielt unterschiedliche Module einzusetzen, wodurch dem Kind auch Abwechslung geboten wird, ohne es mit einem Überangebot zu überfordern.

Das Spielhaus soll ferner auch einen geschützten eigenen Raum mit Höhlencharakter für das Kind bieten, in den es sich zurückziehen kann. In Fig. 5 ist schematisch ein Spielhaus dargestellt, bei dem zwei der Wandteile nicht eingezeichnet sind. An den Wandteilen befinden sich im oberen Bereich nach innen ragende Vorsprünge 13 in Form von Leisten, auf welchen ein Zwischendeckenteil 14 aufgelegt ist. In dem gezeigten Zwischendeckenteil 14 sind in eingebohrten Löchern LED-Lichter eingearbeitet, welche als Sternenhimmel den Innenraum des Spielhauses erleuchten. Die Elektronik sowie eine Akkubox und/oder ein Empfänger für eine Fernbedienung befinden sich auf der Oberseite des Zwischendeckenteils 14 und sind somit für das Kind unzugänglich, wodurch auch hier eine ungewollte Manipulation mit den stromführenden Teilen ausgeschlossen ist. Es kann auch ein Lichtschalter durch eine entsprechende Ausnehmung im Zwischendeckenelement ragen, sodass das Licht vom Kind direkt bedient werden kann. Auf dem Dachteil sind nach unten abstehende Vorsprünge 15 in Form von Leisten vorgesehen, welche beim Aufsetzen des Dachteils das Zwischendeckenteil 14 in Richtung der Vorsprünge 13, die sich an den Wandteilen befinden, drücken und somit einklemmen. Das Zwischendeckenteil ist damit auch gegen ungewolltes Anheben durch das Kind gesichert und Verletzungen durch Einklemmen werden vermieden. Auch hier können wiederum einfach modular andere Zwischendeckenelemente 14 mit unterschiedlicher Ausgestaltung eingesetzt werden.

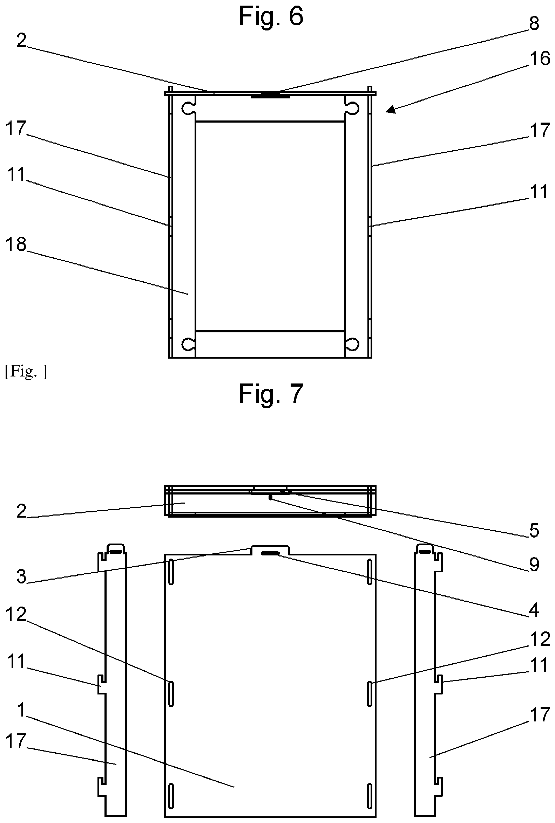

In der Fig. 6 ist eine Wandhalterung 16 dargestellt. Dabei handelt es sich um eine Ausführungsform eines erfindungsgemäßen Möbelstücks, bei dem auf der Wandhalterung 16 unterschiedliche modulare Wandteile befestigt werden können. An den einzelnen Wandteilen können unterschiedliche Aktivitäten und Spiele angeordnet sein. Die Wandhalterung 16 umfasst zwei seitliche senkrecht und normal zur Wand angeordnete Halterungselemente 17 und ein quer dazu darüber angeordnetes zweites plattenförmiges Element 2 als Dachteil. Der Dachteil kann entweder lose aufgesetzt werden oder gelenkig mit den Halterungselementen 17 verbunden sein. Um der Wandhalterung mehr Stabilität zu geben und eine einfache Montage zu ermöglichen, sind die wesentlichen Elemente über Rahmenelemente 18 miteinander verbunden.

In der Fig. 7 sind die wesentlichen Elemente der Wandhalterung 16 sowie schematisch ein erstes plattenförmiges Element 1 jeweils in Seitenansichten dargestellt. Das als Wandteil ausgeformte erste plattenförmige Element 1 kann über Aufnahmen 12 an den Haken 11 der Halterungselemente 17 eingehängt werden. Anschließend wird das als Dachteil ausgeformte zweite plattenförmige Element 2 aufgesetzt bzw. in eine Sicherungsposition verschwenkt. Dabei dringt der Vorsprung 3 des ersten plattenförmigen Elements 1 in die Ausnehmung 5 im Dachteil ein und kann anschließend durch Einsetzen eines Sicherungselements 6 in die sacklochförmige Aufnahme 8 gesichert werden.

Auf diese Weise können einzelne Wandelemente mit unterschiedlichen spielerischen oder pädagogischen Aktivitäten schnell und leicht getauscht werden, und bieten so immer wieder Abwechslung. Gleichzeitig ist die Sicherung, wie auch beim Spielhaus kindersicher. Es können auch Wandelemente vom Spielhaus als Wandteile an der Wandhalterung 16 fixiert werden, wodurch sich weitere Anwendungsmöglichkeiten ergeben. Eine Wandhalterung 16 kann auch so ausgestaltet werden, dass mehrere Wandteile eines Spielhauses zur Lagerung eingehängt werden können, wobei die Sicherung dann über die Steckverbindung zwischen Dachteil und äußerstem Wandteil erfolgt. Somit ist auch eine platzsparende und sichere Aufbewahrung eines Spielhauses gewährleistet, wenn dieses gerade nicht in Verwendung ist.

## Patentansprüche

1. Möbel aus mehreren miteinander verbindbaren plattenförmigen Elementen (1,2), insbesondere ausgestaltet als Kindermöbel, wie beispielsweise ein Spielhaus, wobei zumindest zwei der benachbarten plattenförmigen Elemente (1,2) durch zumindest eine Steckverbindung verbindbar sind, und wobei diese Steckverbindung durch einen an der Stirnseite eines ersten plattenförmigen Elements (1) ausgebildeten Vorsprung (3) mit einem quer zur Flachseite des plattenförmigen Elements (1) verlaufenden Durchbruch (4), eine Ausnehmung (5) in einem zweiten plattenförmigen Element (2), in welche der Vorsprung (3) des ersten plattenförmigen Elements (1) einführbar ist, und ein formschlüssig in den Durchbruch (4) am Vorsprung (3) einsetzbares Sicherungselement (6) ausgebildet ist, wobei das zweite plattenförmige Element (2) im Bereich der Ausnehmung (5) eine von der nächstgelegenen Stirnseite (7) des plattenförmigen Elements (2) her die Ausnehmung (5) durchragende sacklochförmige Aufnahme (8) aufweist, welche im zusammengesetzten Zustand mit dem Durchbruch (4) im Vorsprung (3) des ersten plattenförmigen Elements (1) fluchtet, und wobei das Sicherungselement (6) im zusammengesetzten Zustand vollständig innerhalb der sacklochförmigen Aufnahme (8) und im Durchbruch (4) des Vorsprungs (3) liegt, **dadurch gekennzeichnet, dass** im Bereich der sacklochförmigen Aufnahme (8) im zweiten plattenförmigen Element (2) an der Flachseite des Elements (2) eine Öffnung (9) vorgesehen ist, welche bis in die sacklochförmige Aufnahme (8) reicht und im zusammengesetzten Zustand mit einer Öffnung (10) im Sicherungselement (6) annähernd fluchtet, wodurch das Sicherungselement (6) durch Einführen eines Werkzeugs, wie beispielsweise eines Stiftes, in die Öffnungen (9,10) und durch das anschließende Durchführen einer Schubbewegung aus der fixierten Lage lösbar ist..

2. Möbel nach Anspruch 1, **dadurch gekennzeichnet, dass** das Sicherungselement (6) im zusammengesetzten Zustand in der sacklochförmigen Aufnahme (8) im zweiten plattenförmigen Element (2) kraftschlüssig eingeklemmt ist.

3. Möbel nach Anspruch 1 oder 2, **dadurch gekennzeichnet, dass** die sacklochförmige Aufnahme (8) im zweiten plattenförmigen Element (2) und das Sicherungselement (6) eine aufeinander abgestimmte Schlüssel-Schloss-Geometrie aufweisen, wodurch das Sicherungselement (6) nur in einer Einsetzrichtung vollständig einsetzbar ist.

4. Möbel nach einem der Ansprüche 1 bis 3, **dadurch gekennzeichnet, dass** das Möbel ein Spielhaus ist, welches vier plattenförmige Elemente (1) als Wandteile und ein plattenförmiges Element (2) als Dachteil umfasst, wobei die Wandteile miteinander über Haken (11) und Aufnahmen (12) ineinander steckbar sind und der Dachteil mit zumindest zwei gegenüberliegenden Wandteilen über jeweils zumindest eine Steckverbindung mit einem im zusammengesetzten Zustand vollständig innerhalb der sacklochförmigen Aufnahme (8) und im Durchbruch (4) des Vorsprungs (3) liegenden Sicherungselement (6) verbindbar ist.

5. Möbel nach Anspruch 4, **dadurch gekennzeichnet, dass** im zusammengebauten Zustand an den Wandteilen im oberen Abschnitt nach innen ragende Vorsprünge (13) zur Auflage eines Zwischendeckenteils (14) vorgesehen sind, **und dass** am Dachteil nach unten ragende Vorsprünge (15) vorgesehen sind, wodurch ein eingesetzter Zwischendeckenteil (14) zwischen den Vorsprüngen (13) der Wandteile und den Vorsprüngen (15) des Dachteils eingeklemmt ist.

6. Möbel nach einem der Ansprüche 1 bis 3, **dadurch gekennzeichnet, dass** das Möbel eine Wandhalterung (16) mit modular daran befestigbaren als Wandteil ausgeformten ersten plattenförmigen Elementen (1) ist, wobei die Wandhalterung (16) zumindest zwei normal zur Wand und senkrecht parallel zueinander ausgerichtete Halterungselemente (17) umfasst, an deren Oberseite über ein Gelenk ein als Dachteil ausgeformtes schwenkbar verbundenes zweites plattenförmiges Element (2) vorgesehen ist, und wobei ein modular daran befestigbares Wandteil über Haken (11) und Aufnahmen (12) an den Halterungselementen (17) der Wandhalterung (16) befestigbar ist, wonach der Dachteil nach dem Verschwenken in eine Sicherungsposition über zumindest eine Steckverbindung mit einem im zusammengesetzten Zustand vollständig innerhalb der sacklochförmigen Aufnahme (8) und im Durchbruch (4) des Vorsprungs (3) liegenden Sicherungselement (6) mit dem Wandteil verbindbar ist.

## Claims

1. A furniture made of a plurality of interconnectable plate-shaped elements (1, 2), in particular designed as children's furniture such as a playhouse, wherein at least two of the adjacent plate-shaped elements (1, 2) can be connected by at least one plug-in connection, and wherein this plug-in connection is formed by a projection (3) formed on the end face of a first plate-shaped element (1) with a breakthrough (4) extending transversely to the flat side of the plate-shaped element (1), a recess (5) in a second plate-shaped element (2), into which the projection (3) of the first plate-shaped element (1) can be inserted, and a securing element (6) which can be positively inserted into the breakthrough (4) at the projection (3), wherein the second plate-shaped element (2) includes in the region of the recess (5) a blind-hole shaped receptacle (8), which passes through the recess (5) from the nearest end face (7) of the plate-shaped element (2), which, in the assembled state, is aligned with the breakthrough (4) in the projection (3) of the first plate-shaped element (1), and wherein the securing element (6), in the assembled state, lies completely within the blind-hole shaped receptacle (8) and in the breakthrough (4) of the projection (3), **characterised in that** in the region of the blind-hole shaped receptacle (8) in the second plate-shaped element (2) at the flat side of the element (2) an opening (9) is provided, which extends into the blind-hole shaped receptacle (8) and, in the assembled state, is approximately aligned with an opening (10) in the securing element (6), whereby the securing element (6) can be released from the fixed position by inserting a tool such as a pin into the openings (9, 10) and by subsequently performing a pushing movement.

2. The furniture according to claim 1, **characterised in that** the securing element (6), in the assembled state, is friction locked in the blind-hole shaped receptacle (8) in the second plate-shaped element (2).

3. The furniture according to claim 1 or 2, **characterised in that** the blind-hole shaped receptacle (8) in the second plate-shaped element (2) and the securing element (6) include a coordinated key lock geometry, whereby the securing element (6) can be fully inserted in only one direction of insertion.

4. The furniture according to any of claims 1 to 3, **characterised in that** the furniture is a playhouse which comprises four plate-shaped elements (1) as wall parts and one plate-shaped element (2) as a roof part, wherein the wall parts can be plugged into one another via hooks (11) and receptacles (12), and the roof part can be connected to at least two opposite wall parts via respectively at least one plug-in connection having a securing element (6) which, in the assembled state, lies completely within the blind-hole shaped receptacle (8) and in the breakthrough (4) of the projection (3).

5. The furniture according to claim 4, **characterised in that,** in the assembled state, inwardly protruding projections (13) are provided on the wall parts in the upper section for supporting an intermediate ceiling part (14), and **in that** downwardly protruding projections (15) are provided at the roof part, whereby an inserted intermediate ceiling part (14) is sandwiched between the projections (13) of the wall parts and the projections (15) of the roof part.

6. The furniture according to any of claims 1 to 3, **characterised in that** the furniture is a wall bracket (16) with first plate-shaped elements (1) which can be fastened modularly thereto and are shaped as a wall part, wherein the wall bracket (16) comprises at least two holding members (17) which are aligned normally to the wall and vertically parallel to one another, on the upper side of which a second plate-shaped element (2) shaped as a roof part via a joint pivotally connected thereto is provided, and wherein a wall part which can be modularly attached thereto can be fastened to the holding members (17) of the wall bracket (16) via hooks (11) and receptades (12), after which the roof part, after being swivelled into a securing position, can be connected to the wall part via at least one plug-in connection with a securing element (6) which, in the assembled state, lies completely within the blind-hole shaped receptacle (8) and in the breakthrough (4) of the projection (3).

## Revendications

1. Meuble constitué de plusieurs éléments (1, 2) en forme de plaque pouvant être reliés les uns aux autres, réalisé notamment en tant que meuble pour enfants, s'agissant par exemple d'une maisonnette ludique, au moins deux des éléments (1, 2) adjacents en forme de plaque pouvant être reliés au moyen d'au moins une liaison par emboîtement, et ladite liaison par emboîtement étant réalisée par une saillie (3) qui est formée sur la face frontale d'un premier élément (1) en forme de plaque et qui présente une percée (4) s'étendant transversalement à la face plate de l'élément (1) en forme de plaque, par un évidement (5) dans un deuxième élément (2) en forme de plaque dans lequel on peut introduire la saillie (3) du premier élément (1) en forme de plaque, et par un élément de sécurisation (6) pouvant être placé, par complémentarité de forme, dans la percée (4) équipant la saillie (3), le deuxième élément (2) en forme de plaque présentant, au niveau de l'évidement (5), une prise (8) sous forme de trou borgne qui s'étend à travers l'évidement (5) depuis la face frontale (7) la plus proche de l'élément (2) en forme de plaque et qui est alignée, à l'état assemblé, avec la percée (4) dans la saillie (3) du premier élément (1) en forme de plaque, et l'élément de sécurisation (6) se trouvant, à l'état assemblé, entièrement à l'intérieur de la prise (8) sous forme de trou borgne et dans la percée (4) de la saillie (3), **caractérisé en ce que** le deuxième élément (2) en forme de plaque est pourvu, au niveau de la prise (8) sous forme de trou borgne, d'une ouverture (9) qui est située sur la face plate de l'élément (2) et qui s'étend jusque dans la prise (8) sous forme de trou borgne tout en étant approximativement alignée, à l'état assemblé, avec une ouverture (10) dans l'élément de sécurisation (6), faisant en sorte que l'élément de sécurisation (6) puisse être retirée de la position fixée en introduisant un outil, s'agissant par exemple d'une goupille, dans les ouvertures (9, 10) pour ensuite effectuer un mouvement de poussée.

2. Meuble selon la revendication 1, **caractérisé en ce qu'**à l'état assemblé, l'élément de sécurisation (6) est serré au sein de la prise (8) sous forme de trou borgne dans le deuxième élément (2) en forme de plaque, de façon à obtenir une liaison par friction.

3. Meuble selon la revendication 1 ou 2, **caractérisé en ce que** la prise (8) sous forme de trou borgne dans le deuxième élément (2) en forme de plaque et l'élément de sécurisation (6) ont une géométrie complémentaire de type clé-serrure, faisant en sorte que l'élément de sécurisation (6) ne puisse être introduit complètement que selon un seul sens d'introduction.

4. Meuble selon l'une des revendications 1 à 3, **caractérisé en ce que** ledit meuble est une maisonnette ludique comprenant quatre éléments (1) en forme de plaque en tant que segments de paroi et un élément (2) en forme de plaque en tant que segment de toiture, les segments de paroi pouvant être emboîtés les uns dans les autres au moyen de crochets (11) et de prises (12), et le segment de toiture pouvant être relié à chacun d'au moins deux segments de paroi opposés au moyen d'au moins une liaison par emboîtement pourvue d'un élément de sécurisation (6) qui, à l'état assemblé, est situé entièrement au sein de la prise (8) sous forme de trou borgne et dans la percée (4) de la saillie (3).

5. Meuble selon la revendication 4, **caractérisé en ce qu'**à l'état assemblé, les segments de paroi sont pourvus, dans leur partie supérieure, de saillies (13) s'étendant vers l'intérieur afin de pouvoir supporter un segment de plafond intermédiaire (14), **et que** le segment de toiture est pourvu de saillies (15) s'étendant vers le bas, de manière à ce qu'un segment de plafond intermédiaire (14) mis en place soit serré entre les saillies (13) des segments de paroi et les saillies (15) du segment de toiture.

6. Meuble selon l'une des revendications 1 à 3, **caractérisé en ce que** ledit meuble est un support mural (16) comportant des premiers éléments (1) en forme de plaque qui sont réalisés sous forme de segment de paroi pouvant y être fixés de manière modulaire, le support mural (16) comprenant au moins deux éléments de support (17) dont l'orientation est normale à la paroi et verticalement parallèle l'un à l'autre et dont la face supérieure est pourvue, en liaison qui permet de l'orienter à travers une articulation, d'un deuxième élément (2) en forme de plaque réalisé sous forme de segment de toiture, et un segment de paroi pouvant y être fixé de manière modulaire étant susceptible d'être fixé aux éléments de support (17) du support mural (16) au moyen de crochets (11) et de prises (12), pour faire en sorte que le segment de toiture puisse être relié, après avoir été orienté dans une position de sécurisation, au segment de paroi par au moins une liaison par emboîtement pourvue d'un élément de sécurisation (6) qui, à l'état assemblé, est situé entièrement au sein de la prise (8) sous forme de trou borgne et dans la percée (4) de la saillie (3).
